# EUROPÄISCHE PATENTSCHRIFT

(11) **EP 1 717 067 B1**
(45) Veröffentlichungstag und Bekanntmachung des Hinweises auf die Patenterteilung: **04.03.2009**
(21) Anmeldenummer: 05028695.4
(22) Anmeldetag: 30.12.2005
(51) Int. Cl.: B60D 1/54

(54) **Antrieb für eine Anhängerkupplung**
Drive for a trailer coupling
Dispositif d'entraînement pour un attelage de remorque

(30) Priorität: 26.04.2005 DE 202005006751 U
(43) Veröffentlichungstag der Anmeldung: 02.11.2006
(73) Patentinhaber: Jaeger Cartronix GmbH, 61145 Friedberg (DE)
(72) Erfinder: Hachadorian, Gary, 63934 Röllbach (DE)
(74) Vertreter: KEIL & SCHAAFHAUSEN Patentanwälte

(56) Entgegenhaltungen:
- EP-A- 1 275 533
- EP-A- 1 544 003
- DE-U1- 9 408 478
- DE-U1-3202004 010 27
- US-A1- 2003 222 426
- US-B1- 6 447 000

## Beschreibung

Die Erfindung betrifft einen Antrieb für eine Anhängerkupplung mit einem an ein Kupplungsmodul mit einer bewegbaren Anhängerkupplung ankoppelbaren Kraftübertragungselement und einem Betätigungselement zum manuellen Antreiben des Kraftübertragungselements. Ein Gattungsgemässe Anhängerkupplung ist in der EP 1 544 003 offenbart.

Ein derartiger Antrieb wird bei Anhängerkupplungen eingesetzt, die nicht elektromotorisch gesteuert verstellt werden, um zu vermeiden, dass zum Verstellen der Anhängerkupplung direkt an dem Kugelhals der Kupplung mit der Hand angegriffen werden muss. Durch das Kraftübertragungselement ist es möglich, die Anhängerkupplung aus einer bequemeren Position, bspw. in dem geöffneten Kofferraum, zu betätigen und zwischen einer Ruhestellung und einer Betriebsstellung zu verschwenken.

Um die Sicherheit der Anhängerkupplung im Betrieb zu gewährleisten, muss die Verstellung der Anhängerkupplung jeweils bis in ihre Endstellungen erfolgen, da in einer Zwischenstellung der Anhängerkupplung ein sicherer Betrieb nicht möglich ist.

In diesem Zusammenhang ist aus der DE 94 08 478 U1 eine Drehverriegelung für einen Handradantrieb von geradlinig geführten Hubzahnstangen bekannt, die als Kraftübertragungselemente dienen können. An dem Handrad ist eine Verriegelung vorgesehen, die sich mittels eines Riegelstiftes nur in bestimmten Positionen einrasten lässt. Dadurch kann sicher gestellt werden, dass eine Verriegelung des Handrads bspw. nur in den vorgesehenen Endpositionen des Bewegungshubs möglich ist.

In der DE 20 2004 010 273 U1 wird eine Anhängerkupplung mit einem Handradmechanismus zum Auslösen der Sperrung einer verschwenkbaren Kugelstange beschrieben, die in ihren Schwenkendlagen verriegelt wird. Diesem Handrad sind Signalmittel zur Positionsüberwachung der Kugelstange zugeordnet. Solange die Kugelstange noch nicht ihre endgültige, ordnungsgemäß verriegelte Betriebsposition eingenommen hat, steht das Handrad mit einem deutlich erkennbaren Spalt von dem Handradgehäuse ab und signalisiert so die noch nicht ordnungsgemäße Betriebsstellung.

Ferner ist in der DE 101 34 503 A1 eine Auslöseeinrichtung zur Einleitung einer Bewegung einer Anhängerkupplung zwischen einer Ruhestellung und einer Betriebsstellung beschrieben, welche im Bereich der Kofferraumöffnung angeordnet ist und für deren Betätigung ein Auslöseelement im Sinne eines Werkzeugs verwendet wird. Diese Auslöseelement selbst kann im Bereich der Kofferraumöffnung eines Kraftfahrzeugs angeordnet sein.

Die zuvor beschriebenen Verriegelungsmechanismen verhindern zwar eine ungewollte Betätigung der Anhängerkupplung bspw. während der Fahrt und können teilweise auch eine nicht ordnungsgemäße Position der Anhängerkupplung signalisieren. Da die Signaleinrichtung jedoch nicht unmittelbar bei dem Betätigungselement zum Bewegen der Anhängerkupplung angeordnet ist, wird während der Bewegung nicht sicher gestellt, dass die Endstellung der Anhängerkupplung tatsächlich erreicht wird. Sofern die Anzeigeeinrichtung nach einem Verstellen der Anhängerkupplung nicht gesondert kontrolliert wird, muss eine Fehlstellung der Anhängerkupplung nicht auffallen, so dass es im Betrieb unter Umständen zu Gefahrensituationen kommen kann.

Aufgabe der vorliegenden Erfindung ist es daher, einen Antrieb für eine Anhängerkupplung vorzuschlagen, welcher die Sicherheit bei der Betätigung einer Anhängerkupplung erhöht.

Diese Aufgabe wird mit den Merkmalen des Schutzanspruchs 1 insbesondere dadurch gelöst, dass der Antrieb eine Verriegelung aufweist, welche das Betätigungselement nur in einer Endstellung der bewegbaren Anhängerkupplung freigibt, insbesondere um es aus seiner Betätigungsposition in eine Position zu verbringen, in der eine Betätigung und damit eine Bewegung der Anhängekupplung nicht möglich ist. Da dies nur in den Endpositionen der Anhängerkupplung erfolgen kann, wird dem Benutzter während des Verstellvorgangs deutlich signalisiert, ob sich die Anhängerkupplung in einer betriebssicheren Position befindet.

Insbesondere kann das Betätigungselement eine manuell betreibbare Kurbel sein, so dass der Antrieb der Anhängerkupplung durch eine Verdrehung der Kurbel betätigt wird. Anstelle einer Kurbel könnte zum manuellen Antreiben des Kraftübertragungselements auch eine elektrisch betreibbare Kurbel oder dgl. Werkzeug verwendet werden, bspw. ein Akku-Handschrauber mit einem geeigneten Werkzeugaufsatz. Dieser kann, sofern er von dem Antrieb abgenommen ist, bspw. in einer an dem Antrieb vorgesehenen Ladeschale wieder aufgeladen werden.

Gemäß einer bevorzugten Ausführungsform des erfindungsgemäßen Antriebs ist dabei vorgesehen, dass das Betätigungselement in jeder Endstellung der bewegbaren Anhängerkupplung abnehmbar ist. Solange sich die Anhängerkupplung in einer Zwischenstellung zwischen einer Endstellung, nämlich zwischen der Ruhestellung oder der Arbeitsstellung, befindet, kann das Betätigungselement für den manuellen Antrieb nicht abgenommen werden. Dadurch wird signalisiert, dass sich die Anhängerkupplung noch nicht in einem betriebssicheren Zustand befindet. Gleichzeitig wird sichergestellt, dass der Verstellvorgang für die Anhängerkupplung durch Abnahme des Betätigungselementes von dem Antrieb erst in einer betriebssicheren Position der Anhängerkupplung beendet werden kann.

Vorzugsweise ist die Verriegelung in dem Antrieb bewegbar ausgebildet und weist mindestens eine Öffnung oder Ausnehmung auf, durch welche das Betätigungselement in einer Endstellung in den Antrieb ein- bzw. aus dem Antrieb ausführbar ist. In einer einfachen Ausführungsform kann die Verriegelung bspw. in Form einer drehbaren Scheibe ausgebildet sein, die an zwei den Endstellungen der Anhängerkupplung entsprechenden Verdrehpositionen an ihrem äußeren Umfangsrand Ausnehmungen aufweist, so dass das Betätigungselement in dieser Position von dem Antrieb lösbar ist. In anderen Stellungen der Anhängerkupplung wird das Betätigungselement durch den Umfang der Verriegelung in den Antrieb festgehalten. Dazu weist das Betätigungselement an seinem an dem Antrieb angreifenden Ende eine Verdickung auf, die durch die Verriegelung festgehalten wird.

Gemäß einer anderen Ausführungsform der vorliegenden Erfindung ist in der Verriegelung mindestens eine Öffnung vorgesehen, durch welche das Betätigungselement mit seiner Verdickung in einer Endstellung der Anhängerkupplung von dem Antrieb lösbar ist. Dann ist es erfindungsgemäß besonders vorteilhaft, wenn die Verriegelung einen Schlitz aufweist, welcher das Betätigungselement während der Betätigung des Antriebs umfasst, so dass das Betätigungselement während einem Verstellen der Anhängerkupplung nicht abgenommen werden kann.

Um auf einfache Weise eine Positionszuordnung der Verriegelung zu der Anhängerkupplung zu erreichen, kann die Verriegelung gemäß der vorliegenden Erfindung eine Bewegung des Kraftübertragungselements aufnehmen, welches die Anhängerkupplung antreibt. Durch das Vorsehen einer entsprechenden Übersetzung der Bewegung des Kraftübertragungselements kann die Verriegelung dabei auf einfache Weise so eingestellt werden, dass das Betätigungselement in jeder Endstellung der bewegbaren Anhängerkupplung abnehmbar ist.

In einer anderen Ausführungsform der Erfindung ist das Betätigungselement zum manuellen Antreiben des Kraftübertragungselements von dem Antrieb abklappbar, wobei die Verriegelung ein Klappen des Betätigungselements nur in einer Endstellung der bewegbaren Anhängerkupplung ermöglicht. Dies kann bspw. der Griff einer fest an dem Antrieb festgelegten Handkurbel sein, der zum Drehen der Handkurbel und damit zum Bewegen der Anhängerkupplung abgeklappt wird. Dabei weist die Verriegelung eine Endstellungserkennung für die Position der Anhängerkupplung auf und verhindert ein Wiedereinklappen des Griffs der Handkurbel, solange sich die Anhängerkupplung noch in einer Zwischenstellung befindet.

Dazu kann die Verriegelung eine bewegbare Scheibe und einen Bolzen aufweisen, der insbesondere in einem Schlitz der bewegbaren Scheibe geführt ist. An beiden Enden des Schlitzes sind dann gegenüber der Schlitzbreite vergrößerte Öffnungen vorgesehen, durch die der Bolzen in das Betätigungselement zur Freigabe der Klappbewegung vollständig durchgreift, indem er dabei bspw. eine Klapp-Arretierung in dem klappbaren Griff der Kurbel entriegelt. Anstelle des Schlitzes können am Umfangsrand der Scheibe auch einfach Ausnehmungen ausgebildet sein, die in den Endstellungen der Anhängerkupplung ein Durchgreifen des Bolzens in den Griff zur Entriegelung der Klapp-Arretierung erlauben.

Um mehrere Umdrehungen des Betätigungselementes zu ermöglichen, kann die Verriegelung und/oder der Antrieb einen Zählmechanismus, insbesondere ein sogenanntes "Geneva Wheel", zum Zählen der Umdrehungen des Betätigungselements und/oder zum Bewegen der Verriegelung mit dem Betätigungselement aufweisen. Der Bewegungsmechanismus kann bspw. derart ausgebildet sein, dass ein zum Zählen der Umdrehungen vorgesehener Bolzen, der mit dem Betätigungselement mitgedreht wird, in geeignete Führungen der Verriegelung eingreift und diese mitbewegt.

Der Antrieb zum manuellen Antreiben einer Anhängerkupplung kann als Getriebe ausgebildet sein, wobei das Betätigungselement in ein erstes Zahnrad des Getriebes kraft- und/oder formschlüssig eingreift.

Dieses erste Zahnrad kann erfindungsgemäß mittelbar oder unmittelbar mit einem zweiten Zahnrad des Getriebes zusammenwirken, um die Bewegung des ersten Zahnrads auf das Kraftübertragungselement zu übertragen. Durch eine geeignete Übersetzung kann dabei erreicht werden, dass die für die Verstellung der Anhängerkupplung benötigte Kraft soweit begrenzt ist, dass sie manuell, von Hand oder durch bspw. einen Akku-Schrauber, einfach aufgebracht werden kann.

Erfindungsgemäß kann der Antrieb ein drittes Zahnrad aufweisen, welches an das Kraftübertragungselement gekoppelt ist und dessen Bewegung auf die Verriegelung überträgt. Dieses Zahnrad kann auch vorgesehen werden, wenn der Antrieb nicht als Getriebe ausgebildet ist und keine weiteren Zahnräder in dem Antrieb vorgesehen sind, so dass das dritte Zahnrad das einzige Zahnrad ist. Durch eine geeignete Übersetzung des dritten Zahnrads kann auch mehr als eine Umdrehung des Kraftübertragungselements ermöglicht werden, ohne dass die Verriegelung zwischenzeitlich in Positionen kommt, in denen das Betätigungselement aus dem Antrieb herausgenommen werden kann oder freigegeben wird.

Ferner kann der Antrieb eine zusätzliche Anzeigeeinrichtung zur Endstellungserkennung aufweisen, die bspw. auch den Verstellfortschritt anzeigt. Diese kann erfindungsgemäß mit der Verriegelung gekoppelt sein. Zusätzlich kann der Antrieb eine Feststelleinrichtung für das Getriebe in den Endstellungen bspw. in Form eines federbelasteten Bolzens aufweisen, um ein Verdrehen des Getriebes bspw. durch Erschütterungen während der Fahrt des Fahrzeuges zu verhindern. Diese Feststelleinrichtung kann derart ausgebildet sein, dass sie vor einem Antreiben des Betätigungselementes manuell oder bei einem Verbinden des Betätigungselements mit dem Antrieb automatisch gelöst wird.

Die vorliegende Erfindung kann für verschiedene Kraftübertragungselemente eingesetzt werden, insbesondere für eine feste oder flexible Welle oder einen Seilzug. Insbesondere im Falle eines Seilzugs kann das Betätigungselement bspw. als auf der Trommel des Seilzugs angeordnete, abklappbare Handkurbel ausgebildet sein, welche die Trommel des Seilzugs unmittelbar, d.h. ohne ein zwischengeschaltetes Getriebe, antreibt.

Weitere Merkmale, Vorteile und Anwendungsmöglichkeiten der Erfindung ergeben sich aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, unabhängig von deren Zusammenfassung in den Ansprüchen oder deren Rückbeziehung.

Es zeigen:
- Fig. 1: eine dreidimensionale Ansicht des erfindungsgemäßen Antriebs gemäß einer ersten Ausführungsform zusammen mit einem Kupplungsmodul;
- Fig. 2: eine dreidimensionale Ansicht des Getriebes des Antriebs gemäß Fig. 1;
- Fig. 3: eine dreidimensionale Ansicht einer Verriegelung des Getriebes gemäß Fig. 2;
- Fig. 4: eine dreidimensionale Teilansicht eines erfindungsgemäßen Antriebs gemäß einer zweiten Ausführungsform in einer Endstellung der Anhängerkupplung und
- Fig. 5: eine dreidimensionale Ansicht des Antriebs gemäß Fig. 4 in einer Zwischenstellung.

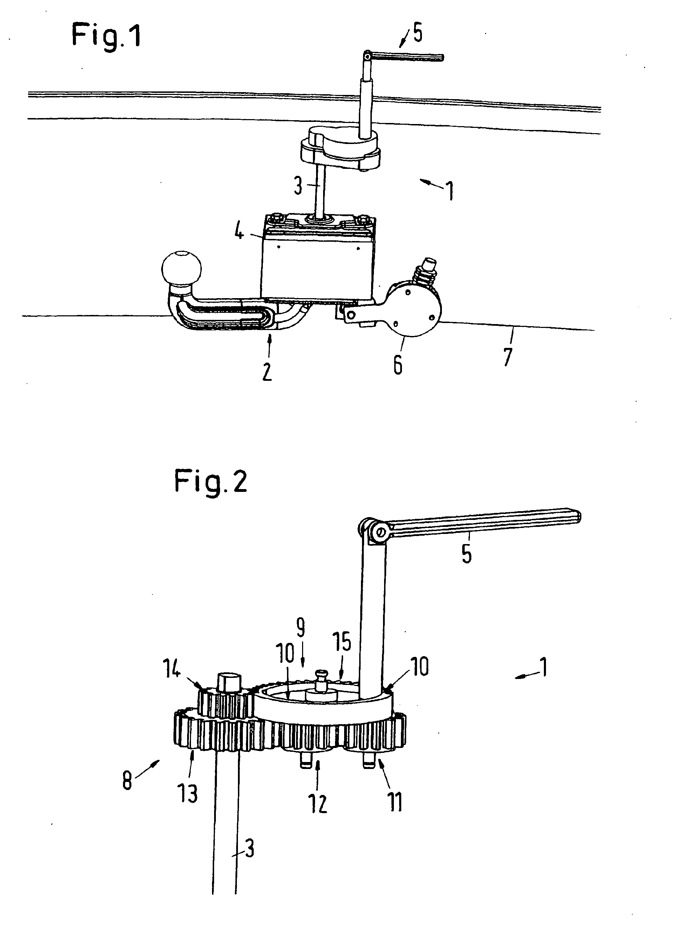

Der in Fig. 1 dargestellte Antrieb 1 für eine Anhängerkupplung 2 ist über eine als Kraftübertragungselement dienende feste Welle 3 an einem Kupplungsmodul 4 mit der bewegbaren Anhängerkupplung 2 angekoppelt. Über die feste Antriebswelle 3 und einen in dem Kupplungsmodul 4 enthaltenen, nicht dargestellten Antriebsmechanismus wird die Anhängerkupplung 2 mit dem Kugelhals und der Kupplungskugel aus einer dargestellten Ruhestellung in eine nicht dargestellte Betriebsstellung überführt. Dazu kann in den Antrieb 1 ein als Kurbel ausgebildetes Betätigungselement 5 in den Antrieb 1 eingesteckt und durch Drehen der Kurbel 5 die zur Verstellung der Anhängerkupplung 2 benötigte Kraft über die Welle 3 auf das Kupplungsmodul 4 übertragen werden. Während der Verstellung der Anhängerkupplung 2 wird auch eine Anhängersteckdose 6 von der hinter einem Stoßfänger 7 des Kraftfahrzeugs liegenden Ruhestellung in eine Betriebsstellung überführt, in der die Anhängersteckdose 6 nach unten unter dem Stoßfänger 7 vorsteht.

Wie der dreidimensionalen Detaildarstellung des ein Getriebe 8 aufweisenden Antriebs 1 in Fig. 2 zu entnehmen ist, weist der Antrieb 1 eine Verriegelung 9 auf, welche das Betätigungselement 5 nur in einer Endstellung der bewegbaren Anhängerkupplung 2, also entweder der Ruhestellung oder der Betriebsstellung, freigibt, so dass die Kurbel 5 nur in dieser Position von dem Antrieb 1 abnehmbar ist. Dazu greift die Kurbel 5 mit ihrem einen Ende durch Öffnungen 10 in der Verriegelung 9 hindurch in ein erstes Zahnrad 11 kraftschlüssig ein. Durch Drehen der Kurbel 5 wird das erste Zahnrad 11 bewegt und überträgt seine Bewegung über ein Zwischenzahnrad 12 mit geeigneter Getriebeübersetzung auf ein zweites Zahnrad 13, welches die Bewegung des ersten Zahnrads 11 auf die Welle 3 zum Antreiben des Kupplungsmoduls 4 bzw. der Anhängerkupplung 2 überträgt.

Auf die Welle 3 ist ferner ein drittes Zahnrad 14 aufgesteckt, so dass dieses die Bewegung der Welle 3 auf die Verriegelung 9 übertragen kann. Die Verrieglung 9 weist an ihrem Umfangsrand streckenweise ein in das dritte Zahnrad 14 eingreifendes Ritzel 15 in Form eines Zahnkranzes auf. Durch das Verdrehen der Verriegelung 9 werden die Öffnungen 10 in den jeweiligen Endstellungen der Anhängerkupplung 2 derart über dem ersten Zahnrad 11 positioniert, dass die Kurbel 5 von dem ersten Zahnrad 11 des Antriebs 1 abgenommen bzw. in dieses eingesteckt werden kann. Die Synchronisation zwischen dem Antrieb 1 und dem Kupplungsmodul 4 wird einfach durch die starre Welle 3 gewährleistet.

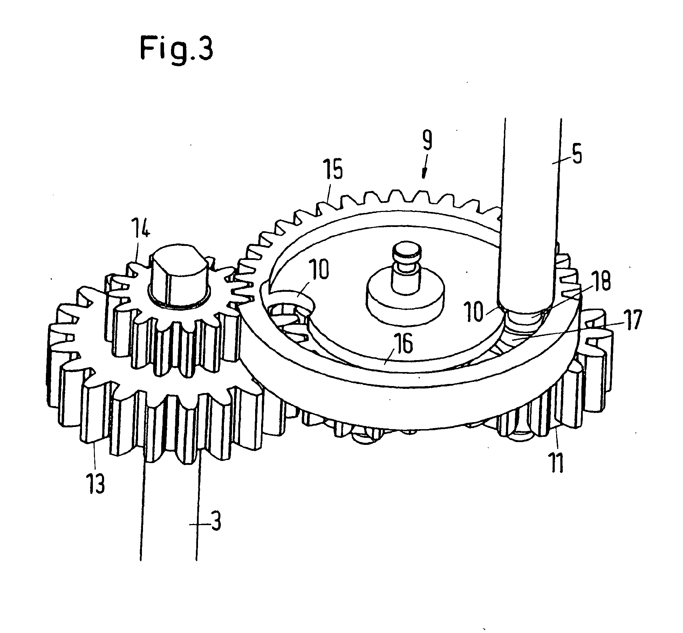

Die Funktion der Verriegelung 9 wird nachfolgend noch einmal mit Bezug auf Fig. 3 beschrieben, welche die Verriegelung 9 im Detail darstellt. In der Verriegelung 9 befinden sich zwei Öffnungen 10, die durch einen Schlitz 16 miteinander verbunden sind. In einer in Fig. 3 dargestellten Endstellungen kann die Kurbel 5, welche an ihrem unteren Ende eine Verdickung 17 gegenüber einer benachbart angeordneten Verjüngung 18 aufweist, durch die Öffnung 10 in das erste Zahnrad 11 eingesteckt bzw. von diesem abgezogen werden. Durch eine Bewegung des ersten Zahnrads 11 werden die Welle 3 mit dem zweiten Zahnrad 13 und dem dritten Zahnrad 14 angetrieben. Das dritte Zahnrad 14 greift dabei in den Zahnkranz 15 der Verriegelung 9 ein, so dass diese mitgedreht wird. Dabei umfasst der Schlitz 16 während der Betätigung des Antriebs 1 das Betätigungselement 5, indem er in die Verjüngung 18 oberhalb der Verdickung 17 der Kurbel 5 eingreift. In dieser Position kann die Kurbel 5 nicht nach oben abgezogen werden, weil die Verdickung 17 durch den Schlitz 16 arretiert wird.

Wenn die Anhängerkupplung 2 ihre andere Endstellung erreicht hat, wurde die Verriegelung 9 so weit gedreht, dass die zweite Öffnung 10 im Bereich der Kurbel 5 über dem Zahnrad 11 liegt, so dass die Kurbel 5 dann abgezogen werden kann. Durch eine geeignete Wahl der Übersetzungen des Getriebes 8 und der Verriegelung 9 kann dabei erreicht werden, dass die Kurbel 5 mehr als einmal gedreht werden kann, so dass der Kraftaufwand zum Verstellen der Anhängerkupplung 2 über die Kurbel 5 zum manuellen Antrieb geeignet eingestellt werden kann.

Erfindungsgemäß kann an der Verriegelung 9 eine Anzeigeeinrichtung zur Endstellungserkennung oder zum Bewegungsfortschritt angebracht sein, die in einer im Kraftfahrzeug montierten Position des Antriebs 1 sichtbar ist. Ferner könnte bspw. die Verriegelung 9 einen nur in einer Endstellung verriegelbaren Feststellmechanismus aufweisen, um nach Abziehen der Kurbelwelle 5 eine Verstellung des Getriebes 8 bspw. aufgrund von Erschütterungen während des Fahrens des Kraftfahrzeugs zu verhindern.

Indem die Kurbel 5 nur in den Endstellungen der Anhängerkupplung 2 von dem Antrieb 1 abgenommen werden kann, wird sichergestellt, dass die Anhängerkupplung 2 bei einem manuellen Bewegen immer bis in ihre jeweiligen Endpositionen bewegt wird, da andernfalls die Kurbel 5 nicht abgenommen werden kann.

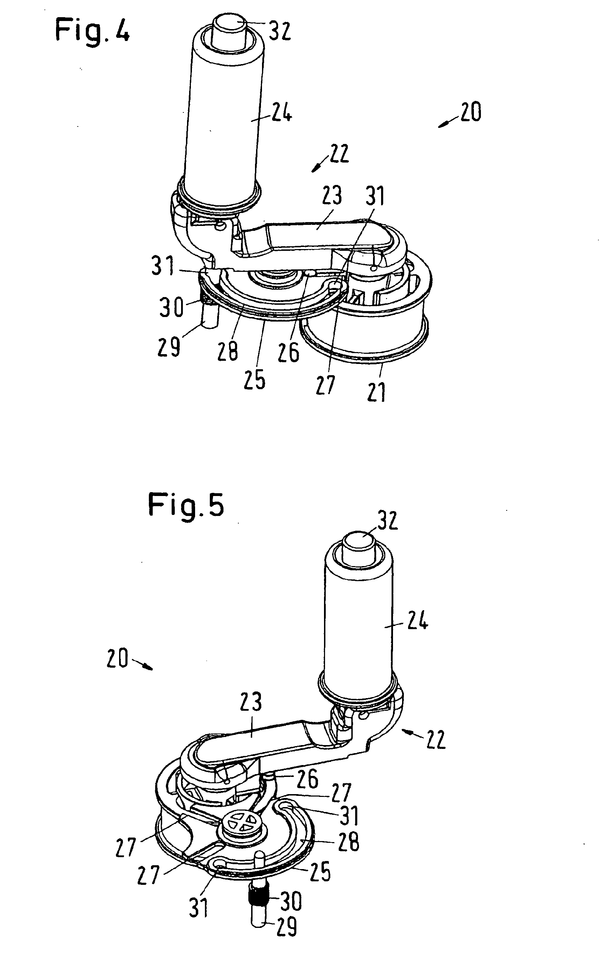

In Fig. 4 ist ein Teil einer zweiten Ausführungsform eines erfindungsgemäßen Antriebs 20 dargestellt, der als Seilzug ausgebildet ist. Von dem Seilzug ist als Teil des Kraftübertragungselements eine Trommel 21 zu sehen, auf der ein nicht dargestelltes Seil zum Verstellen der Anhängerkupplung 2 auf- und abgewickelt wird. Zum Drehen der Trommel 21 ist auf deren Drehachse eine Handkurbel 22 fest montiert, die einen Kurbelarm 23 aufweist, von dem an dem der Drehachse gegenüberliegenden Ende ein Griff 24 abklappbar ist, um die Kurbel drehen zu können.

Ferner ist in dem Antrieb 20 als Verriegelung 25 ein sogenanntes "Geneva Wheel" vorgesehen, mit dem einerseits die Kurbel 22 in den Endstellungen der Anhängerkupplung freigegeben und andererseits die Anzahl der Umdrehungen der gezählt werden.

Dieser Mechanismus wird nachfolgend mit Bezug auf Fig. 5 näher erläutert. Auf dem oberen Umfangsrand der Trommel 21 ist ein Bolzen 26 angeordnet, der während der Drehung der Trommel 21 mit in der Verriegelung 25 verlaufenden Führungsnuten 27 zusammenwirkt. Insgesamt sind drei Führungsnuten 27 in einer Hälfte der Verriegelung 25 radial nach innen verlaufend angeordnet und an dem äußeren Umfangsrand der Verriegelung 25 offen, so dass der Bolzen während der Drehung der Trommel 21 in die Führungsnuten 27 einfährt und die Verrieglung 25 entsprechend weiterdreht.

Bei einer Umdrehung der Kurbel 22 wechselt der Bolzen 26 von einer Führungsnut 27 in die nächste. Auf diese Weise wird durch das Geneva Wheel 25 die Anzahl der Umdrehungen der Kurbel 22 gezählt. Gleichzeitig wird die Verriegelung 25 mit dem Geneva Wheel durch die Kurbel weitergedreht, bis ein in einem Schlitz 28 der Verriegelung 25 geführter Verriegelungsbolzen 29 an dem Ende des Schlitzes 28 anstößt. Diese Position entspricht einer Endstellung der Anhängerkupplung 2. In dieser Position kann der Verriegelungsbolzen 29, der im Bereich des Schlitzes 28 nicht vollständig durch diesen durchtreten kann, angetrieben von einer Feder 30 durch eine Öffnung 31 in der Verriegelung 25 bis in den Griff 24 durchstoßen (vgl. Fig. 4) und dort eine nicht dargestellt Klapp-Arretierung entriegeln.

Dadurch kann der Griff 24 in einer Endstellung der Anhängerkupplung 2 an den Kurbelarm 23 angelegt werden. In einer Zwischenstellung der Anhängerkupplung 2 ist dies nicht möglich, weil in dieser Position der Verriegelungsbolzen 29 nicht durch den Schlitz 28 bis in den Griff 24 durchstoßen und die Klapp-Arretierung entriegeln kann.

Der durch die Öffnung 31 der Verriegelung 25 durchgeführte Verriegelungsbolzen 29 dient gleichzeitig als Verriegelung der Endstellung der Anhängerkupplung, weil der Verriegelungsbolzen 29 aufgrund seines Umfangs in dieser Position nicht durch den Schlitz 28 durchgeführt werden kann. Zur Einleitung der Bewegung der Anhängerkupplung 2 muss daher am Griff 24 ein Entriegelungsknopf 32 gedrückt werden, der den Verriegelungsbolzen 29 soweit herunterdrückt, dass ein Bereich des Verriegelungsbolzens 29 mit geringerem Umfang im Bereicht des Schlitzes 28 angeordnet ist, mit dem er in den Schlitz 28 einführbar ist, so dass die Anhängerkupplung 2 bewegbar ist.

Mit den erfindungsgemäßen Antrieben 1, 20 wird die Sicherheit beim manuellen Betätigen von Anhängerkupplungen 2 also insbesondere dadurch weiter erhöht, dass die Betätigungselemente 5, 22 nur in den Endstellungen der Anhängekupplung freigegeben werden, um sie wieder einer Nicht-Betätigungs-Stellung, bspw. durch Abnehmen oder Umklappen, zuführen zu können.

### Bezugszeichenliste:

- 1: Antrieb
- 2: Anhängerkupplung
- 3: Kraftübertragungselement, Welle
- 4: Kupplungsmodul
- 5: Betätigungselement, Kurbel
- 6: Anhängersteckdose
- 7: Stoßfänger
- 8: Getriebe
- 9: Verriegelung
- 10: Öffnung
- 11: erstes Zahnrad
- 12: Zwischenzahnrad
- 13: zweites Zahnrad
- 14: drittes Zahnrad
- 15: Ritzel
- 16: Schlitz
- 17: Verdickung
- 18: Verjüngung

- 20: Antrieb
- 21: Kraftübertragungselement, Trommel
- 22: Betätigungselement, Kurbel
- 23: Kurbelarm
- 24: Griff
- 25: Verriegelung, Geneva Wheel
- 26: Bolzen
- 27: Führungsnut
- 28: Schlitz
- 29: Bolzen, Verriegelungsbolzen
- 30: Feder
- 31: Öffnung
- 32: Entriegelungsknopf

## Patentansprüche

1. Antrieb für eine Anhängerkupplung (2) mit einem an ein Kupplungsmodul (4) mit einer bewegbaren Anhängerkupplung (2) ankoppelbaren Kraftübertragungselement (3, 21) und einem Betätigungselement (5, 22) zum manuellen Antreiben des Kraftübertragungselements (3, 21), **dadurch gekennzeichnet, dass** der Antrieb (1, 20) eine Verriegelung (9, 25) aufweist, welche das Betätigungselement (5, 22) nur in einer Endstellung der bewegbaren Anhängerkupplung (2) freigibt.

2. Antrieb nach Anspruch 1, **dadurch gekennzeichnet, dass** das Betätigungselement (5, 22) eine manuell oder elektrisch betreibbare Kurbel ist.

3. Antrieb nach Anspruch 1 oder 2, **dadurch gekennzeichnet, dass** das Betätigungselement (5) in jeder Endstellung der bewegbaren Anhängerkupplung (2) abnehmbar ist.

4. Antrieb nach Anspruch 3, **dadurch gekennzeichnet, dass** die Verriegelung (9) in dem Antrieb (1) bewegbar ausgebildet ist und mindestens eine Öffnung (10) und/oder Ausnehmung aufweist, durch welche das Betätigungselement (5) in einer Endstellung von dem Antrieb (1) lösbar ist.

5. Antrieb nach Anspruch 4, **dadurch gekennzeichnet, dass** die Verriegelung (9) einen Schlitz (16) aufweist, welcher das Betätigungselement (5) während der Betätigung des Antriebs (1) umfasst.

6. Antrieb nach einem der Ansprüche 4 oder 5, **dadurch gekennzeichnet, dass** die Verriegelung (9) eine Bewegung des Kraftübertragungselements (3) aufnimmt.

7. Antrieb nach Anspruch 1 oder 2, **dadurch gekennzeichnet, dass** Betätigungselement (22) zum manuellen Antreiben des Kraftübertragungselements (21) von dem Antrieb abklappbar ist, wobei die Verriegelung (25, 29) ein Klappen des Betätigungselements (22) nur in einer Endstellung der bewegbaren Anhängerkupplung (2) ermöglicht.

8. Antrieb nach Anspruch 7, **dadurch gekennzeichnet, dass** die Verriegelung eine bewegbare Scheibe (25) und einen Bolzen (29) aufweist, der insbesondere in einem Schlitz (28) der bewegbaren Scheibe (25) geführt ist, wobei der Schlitz (25) an seinen beiden Enden Öffnungen (31) aufweist, durch die der Bolzen (29) in das Betätigungselement (22) zur Freigabe der Klappbewegung eingreift.

9. Antrieb nach einem der vorhergehenden Ansprüche, **dadurch gekennzeichnet, dass** die Verriegelung (25) und/oder der Antrieb (20) einen Zählmechanismus, insbesondere ein Geneva Wheel (25), zum Zählen der Umdrehungen des Betätigungselements (22) und/oder zum Bewegen der Verriegelung (25) mit dem Betätigungselement (22) aufweist.

10. Antrieb nach einem der vorhergehenden Ansprüche, **dadurch gekennzeichnet, dass** der Antrieb (1) ein Getriebe (8) aufweist.

11. Antrieb nach Anspruch 10, **dadurch gekennzeichnet, dass** das Betätigungselement (5) in ein erstes Zahnrad (11) des Getriebes (8) eingreift.

12. Antrieb nach Anspruch 10 oder 11, **dadurch gekennzeichnet, dass** das Getriebe (8) ein zweites Zahnrad (13) zum Übertragen der Bewegung des ersten Zahlrads (11) auf das Kraftübertragungselement (3) aufweist.

13. Antrieb nach einem der vorhergehenden Ansprüche, **dadurch gekennzeichnet, dass** der Antrieb (1) ein Zahnrad (14) aufweist, welches an das Kraftübertragungselement (3) gekoppelt ist und dessen Bewegung auf die Verriegelung (9) überträgt.

14. Antrieb nach einem der vorhergehenden Ansprüche, **dadurch gekennzeichnet, dass** eine Anzeigeeinrichtung zur Endstellungserkennung vorgesehen ist.

15. Antrieb nach einem der vorhergehenden Ansprüche, **dadurch gekennzeichnet, dass** Kraftübertragungselement eine feste oder flexible Welle (3) oder ein Seilzug (21) ist.

## Claims

1. A drive for a trailer hitch (2) with a force transfer element (3, 21), which can be coupled to a hitch module (4) with a movable trailer hitch (2), and an actuation element (5, 22) for manually driving the force transfer element (3, 21), **characterised in that** the drive (1, 20) has a lock (9, 25), which releases the actuation element (5, 22) only when the movable trailer hitch (2) is in an end position.

2. The drive according to Claim 1, **characterised in that** the actuation element (5, 22) is a manually or electrically operated crank.

3. The drive according to Claim 1 or 2, **characterised in that** the actuation element (5) can be removed when the movable trailer hitch (2) is in either end position.

4. The drive according to Claim 3, **characterised in that** the lock (9) is configured to be movable in the drive (1) and has at least one opening (10) and/or cut-out, through which the actuation element (5) can be removed from the drive (1) when in an end position.

5. The drive according Claim 4, **characterised in that** the lock (9) has a slot (16) which surrounds the actuation element (5) while the drive (1) is being actuated.

6. The drive according to one of Claims 4 or 5, **characterised in that** the lock (9) absorbs a movement of the force transfer element (3).

7. The drive according to Claim 1 or 2, **characterised in that** actuation element (22) for manually driving the force transfer element (21) can be folded down from the drive, with the lock (25, 29) only allowing the actuation element (22) to be folded when the movable trailer hitch (2) is in an end position.

8. The drive according to Claim 7, **characterised in that** the lock has a movable disc (25) and a bolt (29), which is guided in particular in a slot (28) of the movable disc (25), with the slot (25) having openings (31) at both its ends, through which the bolt (29) engages in the actuation element (22) in order to release the folding movement.

9. The drive according to one of the preceding claims, **characterised in that** the lock (25) and/or the drive (20) has a counting mechanism, in particular a Geneva wheel (25), for counting the revolutions of the actuation element (22) and/or for moving the lock (25) with the actuation element (22).

10. The drive according to one of the preceding claims, **characterised in that** the drive (1) has a gear mechanism (8).

11. The drive according to Claim 10, **characterised in that** the actuation element (5) engages in a first gear (11) of the gear mechanism (8).

12. The drive according to Claim 10 or 11, **characterised in that** the gear mechanism (8) has a second gear (13) for transferring the movement of the first gear (11) to the force transfer element (3).

13. The drive according to one of the preceding claims, **characterised in that** the drive (1) has a gear (14) which is coupled to the force transfer element (3) and transfers its movement to the lock (9).

14. The drive according to one of the preceding claims, **characterised in that** an indicator device is provided for identifying the end position.

15. The drive according to one of the preceding claims, **characterised in that** force transfer element is a rigid or flexible shaft (3) or a cord pull (21).

## Revendications

1. Dispositif d'entraînement pour un attelage de remorque (2) comportant un élément de transmission de force (3,21) pouvant être couplé à un module d'attelage (4) avec un attelage de remorque (2) mobile et un élément d'actionnement (5,22) pour entraîner manuellement l'élément de transmission de force (3,21), **caractérisé en ce que** l'entraînement (1,20) présente un dispositif de verrouillage (9,25), lequel libère l'élément d'actionnement (5,22) seulement dans une position finale de l'attelage de remorque (2) mobile.

2. Dispositif d'entraînement selon la revendication 1, **caractérisé en ce que** l'élément d'actionnement (5,22) est une manivelle pouvant être mise en fonctionnement manuellement ou électriquement.

3. Dispositif d'entraînement selon la revendication 1 ou 2, **caractérisé en ce que** l'élément d'actionnement (5) peut être retiré dans chaque position finale de l'attelage de remorque (2) mobile.

4. Dispositif d'entraînement selon la revendication 3, **caractérisé en ce que** le dispositif de verrouillage (9) est configuré de manière mobile dans le dispositif d'entraînement (1) et présente au moins une ouverture (10) et/ou une cavité, à travers laquelle l'élément d'actionnement (5) peut être détaché du dispositif d'entraînement (1) en sa position finale.

5. Dispositif d'entraînement selon la revendication 4, **caractérisé en ce que** le dispositif de verrouillage (9) présente une fente (16), laquelle comprend l'élément d'actionnement (5) pendant l'actionnement du dispositif d'entraînement (1).

6. Dispositif d'entraînement selon une des revendications 4 ou 5, **caractérisé en ce que** le dispositif de verrouillage (9) absorbe un mouvement de l'élément de transmission de force (3).

7. Dispositif d'entraînement selon la revendication 1 ou 2, **caractérisé en ce que** l'élément d'actionnement (22) peut être rabattu du dispositif d'entraînement à des fins d'entraînement manuel de l'élément de transmission de force (21), dans lequel le dispositif de verrouillage (25,29) permet un rabattement de l'élément d'actionnement (22) seulement dans une position finale de l'attelage de remorque (2) mobile.

8. Dispositif d'entraînement selon la revendication 7, **caractérisé en ce que** le dispositif de verrouillage présente une rondelle mobile (25) et un boulon (29), qui est inséré notamment dans une fente (28) de la rondelle mobile (25), dans lequel la fente (25) présente à ses deux extrémités des ouvertures (31), à travers lesquelles le boulon (29) est mis en prise dans l'élément d'actionnement (22) afin de libérer le mouvement de rabattement.

9. Dispositif d'entraînement selon une des revendications précédentes, **caractérisé en ce que** le dispositif de verrouillage (25) et/ou le dispositif d'entraînement (20) présente un mécanisme de comptage, notamment un mécanisme à croix de Malte (25), pour compter les révolutions de l'élément d'actionnement (22) et/ou pour déplacer le dispositif de verrouillage (25) avec l'élément d'actionnement (22).

10. Dispositif d'entraînement selon une des revendications précédentes, **caractérisé en ce que** le dispositif d'entraînement (1) présente une transmission (8).

11. Dispositif d'entraînement selon la revendication 10, **caractérisé en ce que** l'élément d'actionnement (5) est mis en prise avec une première roue dentée (11) de la transmission (8).

12. Dispositif d'entraînement selon la revendication 10 ou 11, **caractérisé en ce que** la transmission (8) présente une deuxième roue dentée (13) pour transmettre le mouvement de la première roue dentée (11) à l'élément de transmission de force (3).

13. Dispositif d'entraînement selon une des revendications précédentes, **caractérisé en ce que** le dispositif d'entraînement (1) présente une roue dentée (14), laquelle est couplée à l'élément de transmission de force (3) et transmet le mouvement de celui-ci au dispositif de verrouillage (9).

14. Dispositif d'entraînement selon une des revendications précédentes, **caractérisé en ce que** un dispositif d'affichage est prévu à des fins de reconnaissance de la position finale.

15. Dispositif d'entraînement selon une des revendications précédentes, **caractérisé en ce que** l'élément de transmission de force est un arbre (3) fixe ou flexible ou un câble de traction (21).
